# EUROPEAN PATENT APPLICATION

(11) **EP 3 753 460 A1**
(43) Date of publication of application: **23.12.2020**
(21) Application number: 19817111.8
(22) Date of filing: 26.04.2019
(51) Int. Cl.: A47J 42/22, A47J 42/10, A47J 42/38

(54) **MORTAR BODY AND MILL DEVICE**

(71) Applicant: JAPAN PORLEX & CO., LTD., Kirishima-shi Kagos hima 8996301 (JP)
(72) Inventor: KANAZAWA Kazuhiko, Kirishima-shi Kagoshima 8996301 (JP)
(74) Representative: Isarpatent
(86) International application number: PCT/JP2019/018095
(87) International publication number: WO 2020/217500

(57) **Abstract**

A mortar body includes an inner mortar portion 20 and an outer mortar portion 30, and in the inner surface of the outer mortar portion 30, second entrance concave portions 33 and second entrance convex portions 34 are formed. In the second entrance concave portions 33, three entrance concave portions which are different from each other in area are assumed to be one group, and this group is repeated. A second entrance medium concave portion 33B is arranged adjacent to a second entrance large concave portion 33A, a second entrance small concave portion 33C is arranged adjacent to the second entrance medium concave portion 33B, a second entrance large concave portion 33A is further arranged adjacent to the second entrance small concave portion 33C and this arrangement is repeated. In the second entrance convex portions 34, three entrance convex portions which are different from each other in convex portion angle are assumed to be one group, and this group is repeated so as to form the second entrance convex portions 34. A second entrance medium convex portion 34B is arranged adjacent to a second entrance small convex portion 34A, a second entrance large convex portion 34C is arranged adjacent to the second entrance medium convex portion 34B, a second entrance small convex portion 34A is further arranged adjacent to the second entrance large convex portion 34C and this arrangement is repeated.

## Description

### BACKGROUND

### [Field of the Invention]

The present invention relates to mortar bodies and mill devices. More specifically, the present invention relates to a mortar body and a mill device for grinding, for example, coffee beans.

### [Background Art]

Coffee beverages obtained by roasting coffee beans, grinding the roasted coffee beans and extracting, from the resulting powder, ingredients with hot water or water have long been popular.

Even when ingredients are extracted from roasted coffee beans, the extraction efficiency of the resulting coffee extract is low, and the flavor thereof is poor.

On the other hand, the extraction efficiency is increased by finely grinding roasted coffee beans, and thus the rate of extraction is increased, and thus the step of grinding coffee beans is an important step.

Conventionally, various coffee mills and coffee grinders have been proposed.

For example, Patent Literature 1 discloses a coffee grinder 301 as shown in Fig. 5.

Specifically, the coffee grinder 301 disclosed in Patent Literature 1 includes a reservoir 310 for containing a plurality of coffee beans 305 and a grinding tool 320 which has a polishing surface 321 for performing a grinding operation on the coffee beans 305.

The grinding tool 320 includes a cylindrical part 326 which can be rotated about a vertical axis, and one end of the cylindrical part 326 is connected to the drive shaft 331 of a motor 330.

The coffee grinder 301 also includes a housing 350 which surrounds the cylindrical part 326.

The housing 350 is arranged directly under the reservoir 310, and includes a grinding chamber 351.

The grinding chamber 351 has an asymmetrical funnel shape, an opening portion having the largest size is present in an upper portion of the grinding chamber 351 and an opening portion having the smallest size is present in a bottom portion of the grinding chamber 351.

One region 352 in the surface 353 of the housing 350 is extended in a substantially vertical direction, that is, in a direction parallel to the vertical axis 327 of the cylindrical part 326, and another region 354 in the surface 353 is inclined with respect to the vertical axis 327 and is not parallel to the vertical axis 327.

A small gap 355 is present between the polishing surface 321 and the region 352, and a larger gap 356 which is gradually reduced in the downward direction is present around a large proportion of the cylindrical part 326.

The coffee grinder 301 also includes a stall detector 341 which detects a stalled state of the grinding tool 320 and/or the motor 330 and a reverse unit 340 which temporarily reverses the direction of rotation of the grinding tool 320 and/or the motor 330 when the stall detector 341 detects the stalled state.

The stall detector 341 is connected to a sensor 342 which senses a rate of rotation of the grinding tool 320, and in order for the sensor 342 to detect the rotation of the grinding tool 320, the grinding tool 320 includes a magnet 343.

The reverse unit 340 includes a controller 344 which controls the direction of rotation of the motor 330.

### [Citation List]

### [Patent Literature]

Patent Literature 1: Japanese Published Unexamined Patent Application (Translation of PCT International Application) No. 2017-501761

### SUMMARY OF THE INVENTION

### [Technical Problem]

However, in the coffee grinder disclosed in Patent Literature 1, the small gap is present between the cylindrical part and the surface of the housing which is extended parallel to the cylindrical part, and furthermore, the larger gap which is gradually reduced in the downward direction is present around a large proportion of the cylindrical part, with the result that coffee powder having various particle sizes is produced.

When coffee powder having various particle sizes is produced, that is, when uneven grinding occurs, even if high-grade coffee beans are used, the flavor and the delicious taste thereof cannot be sufficiently extracted, and much of the miscellaneous tastes which are astringent and acrid flow out, with the result that thin and tasteless coffee is produced.

The present invention is made in view of the points described above, and an object thereof is to provide a mortar body and a mill device which can produce a large amount of powder having a predetermined particle diameter so as to realize stable particle sizes.

### [Solution to Problem]

In order to achieve the above object, the mortar body of the present invention includes: a first mortar portion through which a drive shaft can be inserted, which can be rotated about a direction in which the drive shaft is inserted and in which a plurality of first concave portions and a plurality of first convex portions are formed in a surface; and a second mortar portion in which a space where the first mortar portion can be arranged is formed, in an inner surface that makes contact with the space and that is extended in the same direction as the direction of the rotation of the first mortar portion, a plurality of second concave portions and a plurality of second convex portions are formed, the second concave portions and the second convex portions are extended from an edge portion of the inner surface in a direction intersecting the same direction as the direction of the rotation of the first mortar portion, one end portions of the second concave portions located in the edge portion in a plane that is extended in a direction substantially orthogonal to the direction in which the drive shaft is inserted are smaller in area than other end portions on a side opposite to the one end portions of the second concave portions in the direction in which the second concave portions are extended in a plane that is extended in the direction substantially orthogonal to the direction in which the drive shaft is inserted and the one end portions of the second concave portions adjacent to each other are substantially equal in area to each other in a plane that is extended in the direction substantially orthogonal to the direction in which the drive shaft is inserted.

Here, the first mortar portion through which the drive shaft can be inserted, which can be rotated about the direction in which the drive shaft is inserted and in which a plurality of first concave portions and a plurality of first convex portions are formed in the surface and the second mortar portion in which the space where the first mortar portion can be arranged is formed, and in which in the inner surface that makes contact with the space and that is extended in the same direction as the direction of the rotation of the first mortar portion, a plurality of second concave portions and a plurality of second convex portions are formed, it is possible to grind the material to be ground between the first mortar portion and the second mortar portion so as to produce powder.

With the second mortar portion in which the second concave portions and the second convex portions are extended from the edge portion of the inner surface in the direction intersecting the same direction as the direction of the rotation of the first mortar portion, it is possible to discharge the powder passing through the second concave portions from the edge portion directed downward in a vertical direction.

With the second mortar portion in which the one end portions of the second concave portions located in the edge portion in a plane that is extended in the direction substantially orthogonal to the direction in which the drive shaft is inserted are smaller in area than the other end portions on the side opposite to the one end portions of the second concave portions in the direction in which the second concave portions are extended in a plane that is extended in the direction substantially orthogonal to the direction in which the drive shaft is inserted, as compared with a configuration in which the one end portions and the other end portions are substantially equal in area to each other, it is easy to introduce the material to be ground into the second concave portions, grinding in regions other than the second concave and convex regions for uniformizing the sizes of the powder is reduced and thus it is possible to reduce unnecessary grinding.

With the second mortar portion in which the one end portions of the second concave portions adjacent to each other are substantially equal in area to each other in a plane that is extended in the direction substantially orthogonal to the direction in which the drive shaft is inserted, it is possible to discharge the powder with uniform sizes.

Here, the "areas of the one end portions of the second concave portions" mean areas between the one end portions of the second concave portions and the first concave and convex portions, and the "areas of the other end portions of the second concave portions" mean areas between the other end portions of the second concave portions and the first concave and convex portions.

The mortar body of the present invention can have a configuration where the other end portions of the second concave portions adjacent to each other are different from each other in area in a plane that is extended in the direction substantially orthogonal to the direction in which the drive shaft is inserted.

In this case, various sizes of materials to be ground can be introduced into the second concave portions.

Furthermore, the mortar body of the present invention can have a configuration where a convex portion angle is an angle of a plane connecting a bottom portion of the second concave portion and a vertex portion of one of the second convex portions adjacent to the second concave portion with respect to the inner surface of the second mortar portion, the second convex portions adjacent to each other in the one end portion of the second concave portion are substantially equal in the convex portion angle to each other, the second convex portions adjacent to each other in the other end portion of the second concave portion are different from each other in the convex portion angle and the convex portion angle of the second concave portion in which the area of the other end portion is the largest is the smallest.

In this case, it is easy to introduce the material to be ground into the second concave portions as compared with a configuration in which the depth of the concave portion is increased and in which thus the area of the concave portion is increased.

Here, the "angle with respect to the inner surface" means an angle with respect to a tangent at an intersection between a straight line which passes a central axis extending on the same line as the drive shaft and the vertex portion of the one second convex portion and a curve corresponding to the inner surface in a plane that is extended in the direction substantially orthogonal to the direction in which the drive shaft is inserted.

With respect to the "largest" or the "smallest" described here, when a predetermined number of concave or convex portions adjacent to each other are assumed to be one group, the "largest" or the "smallest" means the "largest in the group" or the "smallest in the group."

The mortar body of the present invention can also have a configuration where in the inner surface of the second mortar portion, a plurality of third convex portions are formed, and the third convex portions communicate with the second convex portions, in connection points of the second convex portions and the third convex portions, projection portions which are projected are provided and a cross-sectional shape of the second mortar portion in a direction substantially orthogonal to the same direction as the direction of the rotation of the first mortar portion is an approximate shape of a letter V with the projection portion serving as a vertex portion.

In this case, the projection portions hit the material to be ground so as to easily grind the material to be ground.

The mortar body of the present invention can also have a configuration where the shape of the first mortar portion is a substantially truncated cone shape, and the first mortar portion includes: a first cross-sectional circular part of which a cross-sectional shape in the direction substantially orthogonal to the direction in which the drive shaft is inserted is substantially circular; and a second cross-sectional circular part of which a cross-sectional shape in the direction substantially orthogonal to the direction in which the drive shaft is inserted is substantially circular and which has a radius smaller than the radius of the first cross-sectional circular part, the second convex portions and the second concave portions of the second mortar portion face the first cross-sectional circular part of the first mortar portion, the third convex portions and the third concave portions of the second mortar portion face the second cross-sectional circular part of the first mortar portion and a distance between the second convex portions and the second concave portions of the second mortar portion and the first cross-sectional circular part of the first mortar portion is shorter than a distance between the third convex portions and the third concave portions of the second mortar portion and the second cross-sectional circular part of the first mortar portion.

In this case, between the inner surface of the second mortar portion in which the third convex portions are formed and the surface corresponding to the second cross-sectional circular part of the first mortar portion, the material to be ground having a relatively large size can be ground.

In order to achieve the above object, the mill device of the present invention includes: a first mortar portion through which a drive shaft can be inserted, which can be rotated about a direction in which the drive shaft is inserted and in which a plurality of first concave portions and a plurality of first convex portions are formed in a surface; a second mortar portion in which a space where the first mortar portion can be arranged is formed, in an inner surface that makes contact with the space and that is extended in the same direction as the direction of the rotation of the first mortar portion, a plurality of second concave portions and a plurality of second convex portions are formed, the second concave portions and the second convex portions are extended from an edge portion of the inner surface in a direction intersecting the same direction as the direction of the rotation of the first mortar portion, one end portions of the second concave portions located in the edge portion in a plane that is extended in a direction substantially orthogonal to the direction in which the drive shaft is inserted are smaller in area than the other end portions on a side opposite to the one end portions of the second concave portions in the direction in which the second concave portions are extended in a plane that is extended in the direction substantially orthogonal to the direction in which the drive shaft is inserted and the one end portions of the second concave portions adjacent to each other are substantially equal in area to each other in a plane that is extended in the direction substantially orthogonal to the direction in which the drive shaft is inserted; and the drive shaft which is extended in one direction, which can be inserted through the first mortar portion so as to be attached to the first mortar portion and which can be rotated about the direction in which the drive shaft is extended.

Here, with the first mortar portion through which the drive shaft can be inserted, which can be rotated about the direction in which the drive shaft is inserted and in which a plurality of first concave portions and a plurality of first convex portions are formed in the surface and the second mortar portion in which the space where the first mortar portion can be arranged is formed, and in which in the inner surface that makes contact with the space and that is extended in the same direction as the direction of the rotation of the first mortar portion, a plurality of second concave portions and a plurality of second convex portions are formed, it is possible to grind the material to be ground between the first mortar portion and the second mortar portion so as to produce powder.

With the second mortar portion in which the second concave portions and the second convex portions are extended from the edge portion of the inner surface in the direction intersecting the same direction as the direction of the rotation of the first mortar portion, it is possible to discharge the powder passing through the second concave portions from the edge portion directed downward in a vertical direction.

With the second mortar portion in which the one end portions of the second concave portions located in the edge portion in a plane that is extended in the direction substantially orthogonal to the direction in which the drive shaft is inserted are smaller in area than the other end portions on the side opposite to the one end portions of the second concave portions in the direction in which the second concave portions are extended in a plane that is extended in the direction substantially orthogonal to the direction in which the drive shaft is inserted, as compared with a configuration in which the one end portions and the other end portions are substantially equal in area to each other, it is easy to introduce the material to be ground into the second concave portions, grinding in regions other than the second concave and convex regions for uniformizing the sizes of the powder is reduced and thus it is possible to reduce unnecessary grinding.

With the second mortar portion in which the one end portions of the second concave portions adjacent to each other are substantially equal in area to each other in a plane that is extended in the direction substantially orthogonal to the direction in which the drive shaft is inserted, it is possible to discharge the powder with uniform sizes.

With the drive shaft which is extended in one direction, which can be inserted through the first mortar portion so as to be attached to the first mortar portion and which can be rotated about the direction in which the drive shaft is extended, the drive shaft is rotated about the direction in which the drive shaft is extended, and thus the first mortar portion can be rotated, with the result that by the rotation of the first mortar portion, between the first mortar portion and the second mortar portion, the material to be ground can be ground so as to produce the powder.

### [Advantageous Effects of Invention]

A mortar body according to the present invention can produce a large amount of powder having a predetermined particle diameter so as to realize stable particle sizes.

A mill device according to the present invention can produce a large amount of powder having a predetermined particle diameter so as to realize stable particle sizes.

### BRIEF DESCRIPTION OF THE DRAWINGS

Fig. 1 is a schematic exploded perspective view showing an example of a mortar body to which the present invention is applied.
Fig. 2 is a schematic partial cross-sectional view showing an example when the inner mortar portion and the outer mortar portion of the mortar body to which the present invention is applied overlap each other.
Fig. 3(a) is a schematic enlarged partial cross-sectional view showing an example when the inner mortar portion and the outer mortar portion of the mortar body to which the present invention is applied are cut along a plane including the entrance of second concave portions; and Fig. 3(b) is a schematic enlarged partial cross-sectional view showing an example when the inner mortar portion and the outer mortar portion of the mortar body to which the present invention is applied are cut along a plane including the exit of the second concave portions.
Fig. 4 is a schematic cross-sectional view showing an example of a coffee mill to which the present invention is applied.

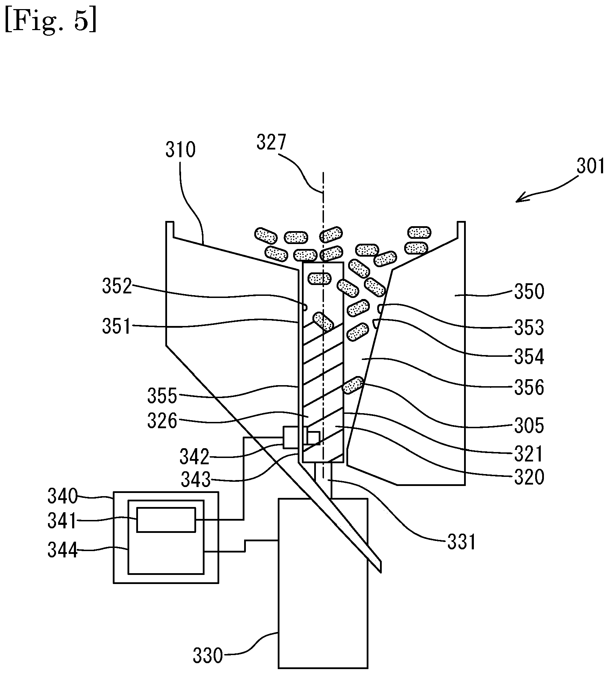

Fig. 5 is a schematic view of a conventional coffee grinder.

### DESCRIPTION OF THE EMBODIMENTS

An embodiment of the present invention will be described below with reference to drawings so as to facilitate understanding of the present invention.

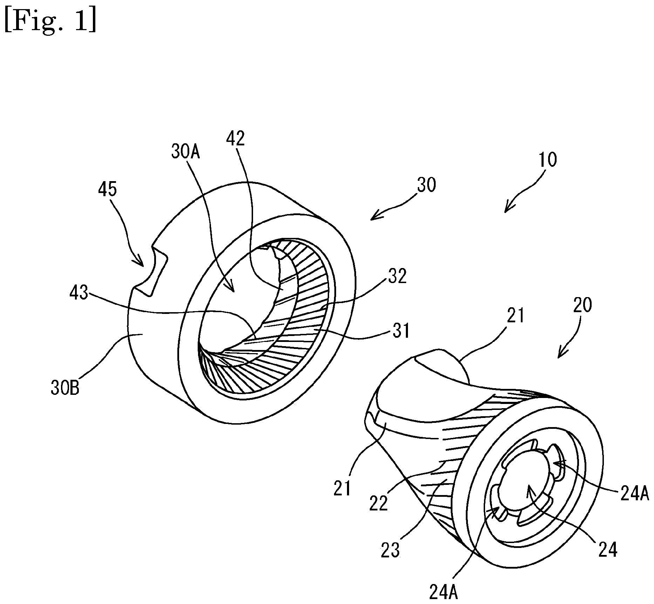

Fig. 1 is a schematic exploded perspective view showing an example of a mortar body to which the present invention is applied.

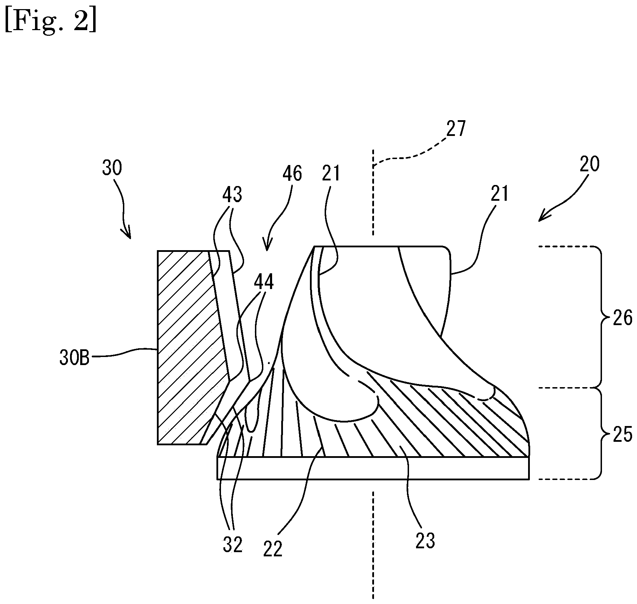

Fig. 2 is a schematic partial cross-sectional view showing an example when the inner mortar portion and the outer mortar portion of the mortar body to which the present invention is applied overlap each other.

The mortar body 10 of the present invention shown in Fig. 1 includes the inner mortar portion 20.

Here, in the inner mortar portion 20, a drive shaft insertion hole 24 through which a drive shaft is inserted is formed so as to penetrate an approximate center portion of the inner mortar portion 20.

In other words, in the two surfaces of the inner mortar portion 20 opposite each other, opening portions are formed, and the drive shaft insertion hole 24 communicates with the outside through these opening portions.

The drive shaft insertion hole 24 is extended in a direction to connect the two surfaces of the inner mortar portion 20 opposite each other.

When the mortar body 20 of the present invention is fitted to a mill device such as a coffee mill so as to be used, the drive shaft which is extended in one direction is inserted through the drive shaft insertion hole 24.

Since the drive shaft inserted through the drive shaft insertion hole 24 is attached to the inner mortar portion 20, the drive shaft is rotated about the direction in which the drive shaft is extended such that the inner mortar portion 20 is rotated about a direction in which the drive shaft is inserted.

Since the drive shaft is inserted through the drive shaft insertion hole 24 which is formed so as to penetrate the approximate center portion of the inner mortar portion 20, the drive shaft and the central axis 27 of the inner mortar portion 20 are extended so as to overlap each other, that is, the drive shaft and the central axis 27 extend on the same line.

Hence, the inner mortar portion 20 is rotated about the central axis 27. Here, the central axis 27 is an intangible virtual line.

Specifically, for example, the drive shaft inserted through the drive shaft insertion hole 24 is attached to the inner mortar portion 20 through a rotation preventing member.

Here, around one end portion of the drive shaft insertion hole 24 extended in the direction to connect the two surfaces of the inner mortar portion 20 opposite each other, that is, in one of the two surfaces of the inner mortar portion 20 opposite each other, a locking concave portion 24A for locking part of the rotation preventing member is formed.

Since the rotation preventing member which is locked in the locking concave portion 24A cannot be rotated about the direction in which the drive shaft is inserted, the inner mortar portion 20 to which the drive shaft is attached through the rotation preventing member as described above cannot be rotated independently of the drive shaft, with the result that the inner mortar portion 20 is rotated integrally with the drive shaft.

The shape of the inner mortar portion 20 is a substantially truncated cone shape.

Here, the inner mortar portion 20 includes a first cross-sectional circular part 25 of which a cross-sectional shape in a direction substantially orthogonal to the direction in which the drive shaft is inserted is substantially circular.

The inner mortar portion 20 also includes a second cross-sectional circular part 26 of which a cross-sectional shape in the direction substantially orthogonal to the direction in which the drive shaft is inserted is substantially circular.

The second cross-sectional circular part 26 has a radius smaller than that of the first cross-sectional circular part 25.

The inner mortar portion 20 includes a plurality of feed blades 21.

Here, the feed blades 21 are formed so as to protrude in a spiral shape from the surface of the second cross-sectional circular part 26 of the inner mortar portion 20.

The feed blades 21 are formed a fixed distance away from each other. In other words, the pitch of the feed blades 21 is large.

In the surface of the first cross-sectional circular part 25 of the inner mortar portion 20, a plurality of first concave portions 22 and a plurality of first convex portions 23 are formed in a spiral shape.

The distance between the first convex portions 23 is smaller than that between the feed blades 21. In other words, the pitch of the first convex portions 23 is smaller than that of the feed blades 21.

On the surface of the second cross-sectional circular part 26 of the inner mortar portion 20, the feed blades 21 are formed.

The inner mortar portion is an example of a first mortar portion.

Here, between the feed blades 21, the first concave portion 22 and the first convex portion 23 can be formed.

The mortar body 10 of the present invention also includes an outer mortar portion 30.

Here, in the outer mortar portion 30, an inner mortar portion arrangement space 30A is formed which is a space where the inner mortar portion 20 can be arranged.

In the inner surface of the outer mortar portion 30 which is in contact with the inner mortar portion arrangement space 30A and which is extended in the same direction as the direction of rotation of the inner mortar portion 20, a plurality of second concave portions 31 and a plurality of second convex portions 32 are formed.

The second concave portions 31 and the second convex portions 32 are extended from an edge portion of the inner surface of the outer mortar portion 30 in a direction intersecting the same direction as the direction of rotation of the inner mortar portion 20.

In the inner surface of the outer mortar portion 30, a plurality of third concave portions 42 and a plurality of third convex portions 43 are also formed.

The third concave portions 42 and the third convex portions 43 are extended, from the edge portion of the inner surface of the outer mortar portion 30 on the side opposite to the edge portion of the inner surface in which the second concave portions 31 and the second convex portions 32 are formed, in a direction intersecting the same direction as the direction of rotation of the inner mortar portion 20.

The distance between the third convex portions 43 is larger than that between the second convex portions 32. In other words, the pitch of the third convex portions 43 is larger than that of the second convex portions 32.

Hence, although the third convex portions 43 communicate with the second convex portions 32, the third convex portions 43 do not always communicate with all the second convex portions 32.

The second concave portions 31 and the second convex portions 32 of the outer mortar portion 30 face the first cross-sectional circular part 25 of the inner mortar portion 20.

The third concave portions 42 and the third convex portions 43 of the outer mortar portion 30 face the second cross-sectional circular part 26 of the inner mortar portion 20.

As shown in Fig. 2, in the connection points of the second convex portions 32 and the third convex portions 43, projection portions 44 which are projected are provided.

Each of the inner surface of the outer mortar portion 30 in which the second concave portions 31 and the second convex portions 32 are formed and the inner surface of the outer mortar portion 30 in which the third concave portions 42 and the third convex portions 43 are formed is inclined with respect to an outer surface 30B which faces in a direction opposite to the inner surfaces of the outer mortar portion 30.

In other words, the distance between the inner surface of the outer mortar portion 30 in which the second concave portions 31 and the second convex portions 32 are formed and the outer surface 30B is gradually increased from the edge portion of the inner surface in which the second concave portions 31 and the second convex portions 32 are formed toward the connection points of the second convex portions 32 and the third convex portions 43.

The distance between the inner surface of the outer mortar portion 30 in which the third concave portions 42 and the third convex portions 43 are formed and the outer surface 30B is gradually increased from the connection points of the second convex portions 32 and the third convex portions 43 toward the edge portion of the inner surface of the outer mortar portion 30 on the side opposite to the edge portion of the inner surface in which the second concave portions 31 and the second convex portions 32 are formed.

Hence, the cross-sectional shape of the outer mortar portion 30 in a direction substantially orthogonal to the same direction as the direction of rotation of the inner mortar portion 20 is an approximate shape of the letter V with the projection portion 44 serving as a vertex portion.

Since as described above, the inner surface of the outer mortar portion 30 in which the second concave portions 31 and the second convex portions 32 are formed and the inner surface of the outer mortar portion 30 in which the third concave portions 42 and the third convex portions 43 are formed are inclined with respect to the outer surface 30B, a distance between the second concave portions 31 and the second convex portions 32 of the outer mortar portion 30 and the first cross-sectional circular part 25 of the inner mortar portion 20 is shorter than a distance between the third concave portions 42 and the third convex portions 43 of the outer mortar portion 30 and the second cross-sectional circular part 26 of the inner mortar portion 20.

In other words, the distance between the third concave portions 42 and the third convex portions 43 of the outer mortar portion 30 and the second cross-sectional circular part 26 of the inner mortar portion 20 is longer than the distance between the second concave portions 31 and the second convex portions 32 of the outer mortar portion 30 and the first cross-sectional circular part 25 of the inner mortar portion 20.

Consequently, a gap 46 is formed between the third concave portions 42 and the third convex portions 43 of the outer mortar portion 30 and the second cross-sectional circular part 26 of the inner mortar portion 20.

A cutout 45 is formed in the outer surface 30B of the outer mortar portion 30.

Here, the cutout 45 is a recess which is extended from the edge portion of the outer surface 30B corresponding to the edge portion of the inner surface in which the third concave portions 42 and the third convex portions 43 are formed to a position of the outer surface 30B corresponding to the projection portions 44 which are formed in the inner surface of the outer mortar portion 30 and which are convex portions.

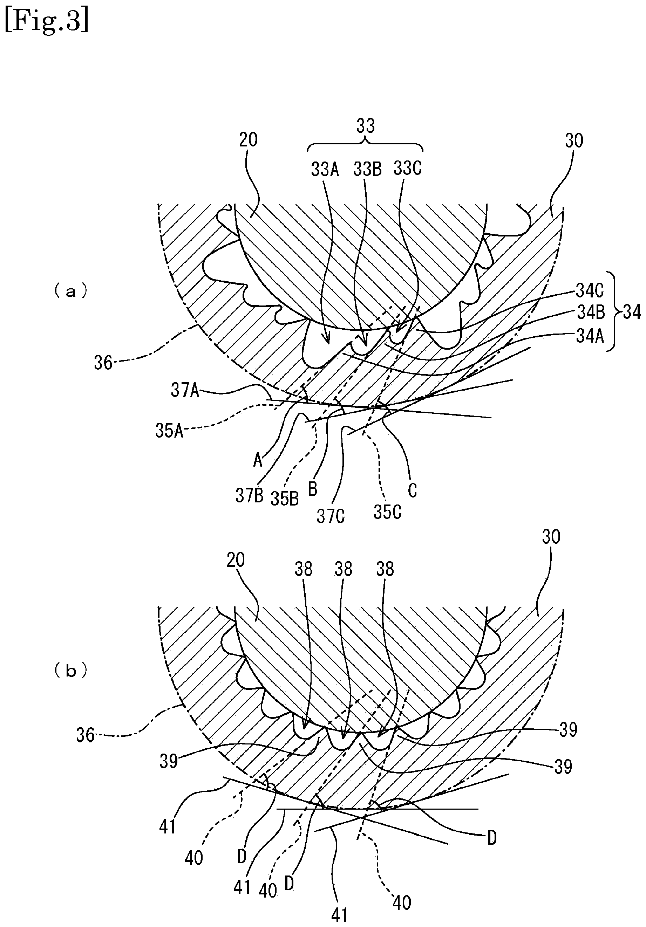

Fig. 3(a) is a schematic enlarged partial cross-sectional view showing an example when the inner mortar portion and the outer mortar portion of the mortar body to which the present invention is applied are cut along a plane including the entrance of the second concave portions.

Fig. 3(b) is a schematic enlarged partial cross-sectional view showing an example when the inner mortar portion and the outer mortar portion of the mortar body to which the present invention is applied are cut along a plane including the exit of the second concave portions.

In Figs. 3(a) and 3(b), the drive shaft insertion hole and the first concave and convex portions of the inner mortar portion are omitted.

In the edge portion of the inner surface of the outer mortar portion 30 in a plane that is extended in the direction substantially orthogonal to the direction in which the drive shaft is inserted, one end portions of the second concave portions 31, that is, second exit concave portions 38 are located.

The other end portions on the side opposite to the one end portions of the second concave portions 31 in the direction in which the second concave portions 31 are extended in a plane that is extended in the direction substantially orthogonal to the direction in which the drive shaft is inserted are second entrance concave portions 33.

The "entrance" means a point through which an material to be ground first enters the second concave portion 31 when the material to be ground is ground with the mortar body 10 of the present invention, and the "exit" means a point through which powder obtained by grinding the material to be ground is finally discharged from the second concave portion 31, that is, a point through which the powder is discharged from the mortar body 10 of the present invention.

In the second entrance concave portions 33, three entrance concave portions which are different from each other in area are assumed to be one group, and the group is repeated so as to form the second entrance concave portions 33.

Specifically, as shown in Fig. 3(a), a second entrance large concave portion 33A whose area is the largest in the group, a second entrance medium concave portion 33B whose area is the second largest in the group and a second entrance small concave portion 33C whose area is the smallest in the group are assumed to be the one group, and the group is repeated so as to form the second entrance concave portions 33.

Here, as shown in Fig. 3(a), the second entrance medium concave portion 33B is arranged adjacent to the second entrance large concave portion 33A, the second entrance small concave portion 33C is arranged adjacent to the second entrance medium concave portion 33B and the second entrance large concave portion 33A is further arranged adjacent to the second entrance small concave portion 33C, and this arrangement is repeated.

The "area of the second entrance concave portion 33" means an area between the second entrance concave portion 33 and the first concave and convex portions (22, 23).

In other words, the second entrance concave portions adjacent to each other are different from each other in area in a plane that is extended in the direction substantially orthogonal to the direction in which the drive shaft is inserted.

The number of concave portions forming the one group does not always need to be three, and can be four or more or two.

A second entrance convex portion 34 is adjacent to the second entrance concave portion 33.

In the second entrance convex portions 34, three entrance convex portions which are different from each other in convex portion angle are assumed to be one group, and the group is repeated so as to form the second entrance convex portions 34.

Here, the convex portion angle is an angle of a plane connecting a bottom portion of the second concave portion 31 and a vertex portion of one of the two second convex portions 32 adjacent to the second concave portion 31 with respect to the inner surface of the outer mortar portion 30.

As shown in Fig. 3(a), a second entrance small convex portion 34A which is adjacent to the second entrance large concave portion 33A and which is one second convex portion, a second entrance medium convex portion 34B which is adjacent to the second entrance medium concave portion 33B and which is one second convex portion and a second entrance large convex portion 34C which is adjacent to the second entrance small concave portion 33C and which is one second convex portion are assumed to be one group, and the group is repeated so as to form the second entrance convex portions 34.

In other words, as shown in Fig. 3(a), the second entrance medium convex portion 34B is arranged adjacent to the second entrance small convex portion 34A, the second entrance large convex portion 34C is arranged adjacent to the second entrance medium convex portion 34B and the second entrance small convex portion 34A is further arranged adjacent to the second entrance large convex portion 34C, and this arrangement is repeated.

The "angle with respect to the inner surface of the outer mortar portion 30" means an angle with respect to a tangent at an intersection between a straight line which passes the central axis 27 extending on the same line as the drive shaft and the vertex portion of the one second convex portion 32 and an inner surface corresponding curve 36 which is a curve corresponding to the inner surface of the outer mortar portion 30 in a plane that is extended in the direction substantially orthogonal to the direction in which the drive shaft is inserted.

Specifically, the convex portion angle A of the second entrance small convex portion 34A is an angle between an entrance small convex portion angle line 35A corresponding to the second entrance small convex portion 34A and an entrance small convex portion corresponding tangent 37A corresponding to the second entrance small convex portion 34A.

The convex portion angle B of the second entrance medium convex portion 34B is an angle between an entrance medium convex portion angle line 35B corresponding to the second entrance medium convex portion 34B and an entrance medium convex portion corresponding tangent 37B corresponding to the second entrance medium convex portion 34B.

The convex portion angle C of the second entrance large convex portion 34C is an angle between an entrance large convex portion angle line 35C corresponding to the second entrance large convex portion 34C and an entrance large convex portion corresponding tangent 37C corresponding to the second entrance large convex portion 34C.

The entrance small convex portion angle line 35A is a straight line which passes through a bottom portion of the second entrance large concave portion 33A and a vertex portion of the second entrance small convex portion 34A.

The entrance medium convex portion angle line 35B is a straight line which passes through a bottom portion of the second entrance medium concave portion 33B and a vertex portion of the second entrance medium convex portion 34B.

The entrance large convex portion angle line 35C is a straight line which passes through a bottom portion of the second entrance small concave portion 33C and a vertex portion of the second entrance large convex portion 34C.

The convex portion angle A of the second entrance small convex portion 34A, the convex portion angle B of the second entrance medium convex portion 34B and the convex portion angle C of the second entrance large convex portion 34C are different from each other.

In other words, in the group, the convex portion angle A is the smallest, and the convex portion angle C is the largest.

As described above, the convex portion angle A of the second entrance small convex portion 34A adjacent to the second entrance large concave portion 33A whose area is the largest in the group is the smallest in the group.

In other words, the convex portion angle for the second entrance large concave portion 33A whose area is the largest in the group is the smallest in the group.

The second exit concave portions 38 are different from the second entrance concave portions 33, and the second exit concave portions 38 adjacent to each other are substantially equal in area to each other in a plane that is extended in the direction substantially orthogonal to the direction in which the drive shaft is inserted.

The "areas of the second exit concave portions 38" mean areas between the second exit concave portions 38 and the first concave and convex portions (22, 23).

The areas of the second exit concave portion 38 are smaller than those of the second entrance concave portion 33.

In other words, the area of the second exit concave portion 38 is smaller than the area of the second entrance small concave portion 33C whose area is the smallest in the group of the second entrance concave portion 33.

The second exit concave portions 38 adjacent to each other are also substantially the same as each other in shape in a plane that is extended in the direction substantially orthogonal to the direction in which the drive shaft is inserted.

A second exit convex portion 39 is adjacent to the second exit concave portion 38.

The second exit convex portions 39 adjacent to each other are substantially equal in convex portion angle to each other.

In other words, the convex portion angle D of the second exit convex portion 39 is an angle between an exit convex portion angle line 40 corresponding to the second exit convex portion 39 and an exit convex portion corresponding tangent 41 corresponding to the second exit convex portion 39.

The exit convex portion angle line 40 is a straight line which passes through a bottom portion of the second exit concave portion 38 and a vertex portion of the second exit convex portion 39.

In the mortar body of the present invention, the second entrance concave portions adjacent to each other, that is, the other end portions of the second concave portions do not always need to be different from each other in area in a plane that is extended in the direction substantially orthogonal to the direction in which the drive shaft is inserted.

However, the other end portions of the second concave portions are preferably different from each other in area because various sizes of materials to be ground can be introduced into the second concave portions.

In the mortar body of the present invention, the second convex portions adjacent to each other in the second exit concave portions, that is, the one end portions of the second concave portions do not always need to be substantially equal in convex portion angle to each other, and the second convex portions adjacent to each other in the second entrance concave portions, that is, the other end portions of the second concave portions do not always need to be different from each other in convex portion angle.

Furthermore, the convex portion angle of the second concave portion in which the area of the other end portion is the largest does not always need to be the smallest.

However, a configuration is preferably adopted in which the second convex portions adjacent to each other in the one end portions of the second concave portions are substantially equal in convex portion angle to each other, in which the second convex portions adjacent to each other in the other end portions of the second concave portions are different from each other in convex portion angle and in which the convex portion angle of the second concave portion where the area of the other end portion is the largest is the smallest because it is easy to introduce the material to be ground into the second concave portions as compared with a configuration in which the depth of the concave portion is increased and in which thus the area of the concave portion is increased.

In the mortar body of the present invention, in the connection points of the second convex portions and the third convex portions, the projection portions do not always need to be provided.

However, the projection portions are preferably provided because the projection portions hit the material to be ground so as to easily grind the material to be ground.

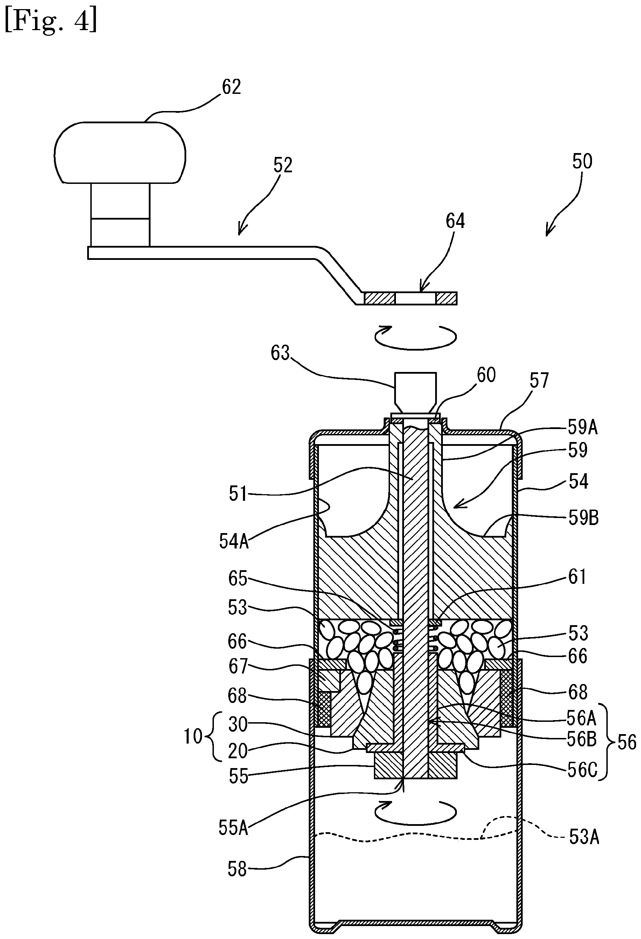

Fig. 4 is a schematic cross-sectional view showing an example of a coffee mill to which the present invention is applied.

The coffee mill 50 of the present invention shown in Fig. 4 includes the mortar body 10 of the present invention.

Here, the coffee mill is an example of a mill device.

The mortar body 10 of the present invention has already been described in detail, and thus a detailed description of the mortar body 10 of the present invention will be omitted here.

The coffee mill 50 of the present invention includes a drive shaft 51.

Here, the drive shaft 51 is extended in one direction, is inserted through the drive shaft insertion hole 24 of the inner mortar portion 20 and is attached to the inner mortar portion 20 through a rotation preventing member 56.

The drive shaft 51 can be rotated about the direction in which it is extended.

The inner mortar portion 20 is attached to the drive shaft 51 through the rotation preventing member 56, and thus the inner mortar portion 20 cannot be rotated independently of the drive shaft 51, with the result that the inner mortar portion 20 is rotated integrally with the drive shaft 51.

The rotation preventing member 56 includes a shaft portion 56A which is extended in one direction.

The rotation preventing member 56 also includes a flange portion 56C. Here, the flange portion 56C is attached to one end of the shaft portion 56A, and is protruding in a direction substantially orthogonal to the direction in which the shaft portion 56A is extended.

In the shaft portion 56A, a shaft hole 56B is formed which penetrates between the one end of the shaft portion 56A and the other end on the side opposite to the one end.

The shaft portion 56A of the rotation preventing member 56 is inserted through the drive shaft insertion hole 24 of the inner mortar portion 20, and the drive shaft 51 is inserted through the shaft hole 56B of the shaft portion 56A which is inserted in the drive shaft insertion hole 24.

The rotation preventing member 56 is locked in the locking concave portion formed in the inner mortar portion 20.

A rectangular shaft portion 63 is attached to one end of the drive shaft 51.

Here, the cross-sectional shape of the rectangular shaft portion 63 in a direction substantially orthogonal to the direction in which the drive shaft 51 is extended is rectangular.

The coffee mill 50 of the present invention includes an operation handle 52.

Here, the operation handle 52 is extended in one direction, and in one end in the direction in which the operation handle 52 is extended, a rectangular shaft hole 64 through which the rectangular shaft portion 63 is inserted is formed so as to penetrate the one end.

A grip 62 is attached to the other end on the side opposite to the one end in the direction in which the operation handle 52 is extended.

The rectangular shaft portion 63 is inserted through the rectangular shaft hole 64 of the operation handle 52, and thus the operation handle 52 can be connected to the drive shaft 51.

The other end on the side opposite to the one end of the drive shaft 51 to which the rectangular shaft portion 63 is attached is, as shown in Fig. 4, protruding from the inner mortar portion 20 and the rotation preventing member 56 when the drive shaft 51 is inserted through the shaft hole 56B of the shaft portion 56A inserted in the drive shaft insertion hole 24 of the inner mortar portion 20.

On the other end of the drive shaft 51 protruding from the inner mortar portion 20 and the rotation preventing member 56, unillustrated screw threads and screw grooves are formed, and an adjustment nut 55 in which a screw hole 55A where screw threads and screw grooves are provided in the inner side is formed is screwed to the other end of the drive shaft 51.

Here, the "other end" is assumed to include not only a tip end but also the surface of the drive shaft in a predetermined range from the tip end.

In this way, the drive shaft 51 and the inner mortar portion 20 are integrally connected together, the drive shaft 51 is rotated about the direction in which the drive shaft 51 is extended and thus the inner mortar portion 20 is also integrally rotated.

As shown in Fig. 4, the drive shaft 51 is arranged within a container main body 54 that is extended in the same direction as the direction in which the drive shaft 51 is extended.

The drive shaft 51 is supported by a bearing 59.

Specifically, the bearing 59 includes a fixed portion 59B which is fixed to the inner wall 54A of the container main body 54 and a shaft support portion 59A which extends from the fixed portion 59B and supports the drive shaft 51.

In one end of the container main body 54 in a direction in which the container main body 54 is extended and the other end on the side opposite to the one end, opening portions are individually formed so as to make the inside of the container main body 54 communicate with the outside.

The one end and the other end of the drive shaft 51 arranged within the container main body 54 are protruding from the opening portions at both ends of the container main body 54, respectively.

As shown in Fig. 4, the bearing 59 is extended in the same direction as the direction in which the drive shaft 51 is extended, a first washer 60 is attached to one end in the direction in which the bearing 59 is extended and a second washer 61 is attached to the other end on the side opposite to the one end in the direction in which the bearing 59 is extended.

The first washer 60 and the second washer 61 are used for locating the bearing 59.

In the configuration as described above, the bearing 59 can support the drive shaft 51 such that the drive shaft 51 can be rotated.

As shown in Fig. 4, a biasing spring 65 is wound around the part of the drive shaft 51 located between the rotation preventing member 56 and the second washer 61.

Here, the end portion of the shaft portion 56A on the side opposite to the end portion to which the flange portion 56C is attached presses the biasing spring 65 so as to contract the biasing spring 65, and thus a biasing force which is caused by the elastic force of the contracted biasing spring 65 and which acts toward the other end of the drive shaft 51 is provided to the rotation preventing member 56 and the inner mortar portion 20 to which the rotation preventing member 56 is attached.

A flange portion 66 which is protruding toward the drive shaft 51 is attached to the inner wall 54A of the container main body 54 so as to surround the drive shaft 51 and to be separated from the drive shaft 51.

An end face of the outer mortar portion 30 that connects the inner surface in which the third concave portions 42 and the third convex portions 43 are formed and the outer surface 30B in which the cutout 45 is formed makes contact with the flange portion 66.

A rotation suppressing member 67 which is protruding toward the drive shaft 51 is attached to the inner wall 54A of the container main body 54 so as to be separated from the drive shaft 51.

The rotation suppressing member 67 makes contact with the cutout 45 formed in the outer surface 30B of the outer mortar portion 30 so as to suppress the rotation of the outer mortar portion 30 about the direction in which the drive shaft 51 is extended.

Since the inner mortar portion 20 is rotated so as to grind the material to be ground between the inner mortar portion 20 and the outer mortar portion 30, the outer mortar portion 30 is rotated together, and thus a grinding force is lowered, with the result that it is important to suppress the rotation of the outer mortar portion 30.

A drop suppressing member 68 is attached to the inner wall 54A of the container main body 54.

Here, the drop suppressing member 68 makes contact with the outer surface 30B of the outer mortar portion 30 so as to suppress free fall of the outer mortar portion 30 by a frictional force and the like.

A lid 57 is attached to the one opening portion of the container main body 54 from which the one end of the drive shaft 51 to which the rectangular shaft portion 63 is attached is protruding such that the lid 57 can be opened and closed.

Here, in the lid 57, a through hole is formed through which the rectangular shaft portion 63 attached to the one end of the drive shaft 51 is inserted.

A powder receiver 58 is attached to the other opening portion of the container main body 54 from which the other end of the drive shaft 51 to which the adjustment nut 55 is attached is protruding such that the powder receiver 58 can be opened and closed.

Here, the powder receiver 58 is extended in the same direction as the direction in which the drive shaft 51 is extended, and in one end in the direction in which the powder receiver 58 is extended, an opening portion is formed that makes the inside of the powder receiver 58 communicate with the outside.

The other end of the powder receiver 58 on the side opposite to the one end in which the opening portion is formed is blocked.

Hence, when the powder receiver 58 is attached to the other opening portion of the container main body 54, as shown in Fig. 4, a space is formed between the mortar body 10 of the present invention and the part of the powder receiver 58 which is blocked, with the result that the powder discharged from the mortar body 10 of the present invention is stored in this space.

The adjustment nut 55 is rotated in one direction so as to be able to reduce the force of the shaft portion 56A which presses the biasing spring 65, and consequently, by the biasing force acting toward the other end of the drive shaft 51, the inner mortar portion 20 is separated from the outer mortar portion 30 in the same direction as the direction in which the drive shaft 51 is extended, with the result that the distance between the first concave portions 22 and the first convex portions 23 of the inner mortar portion 20 and the second concave portions 31 and the second convex portions 32 of the outer mortar portion 30 can be increased.

On the other hand, the adjustment nut 55 is rotated in a direction opposite to the one direction so as to be able to increase the force of the shaft portion 56A which presses the biasing spring 65, and consequently, the inner mortar portion 20 is moved close to the outer mortar portion 30 against the biasing force acting toward the other end of the drive shaft 51 in the same direction as the direction in which the drive shaft 51 is extended, with the result that the distance between the first concave portions 22 and the first convex portions 23 of the inner mortar portion 20 and the second concave portions 31 and the second convex portions 32 of the outer mortar portion 30 can also be decreased.

As described above, the distance between the inner mortar portion 20 and the outer mortar portion 30 is adjusted in the same direction as the direction in which the drive shaft 51 is extended, and thus it is possible to adjust the particle diameter of the powder resulting from the grinding.

Here, the coffee mill of the present invention, that is, the mill device does not always need to include the drop suppressing member.

However, the mill device of the present invention preferably includes the drop suppressing member because when the adjustment nut is rotated so as to adjust the distance between the inner mortar portion and the outer mortar portion, the position of the outer mortar portion is unlikely to be varied, and thus the adjustment of the distance between the inner mortar portion and the outer mortar portion is easily performed.

When the coffee mill 50 of the present invention is used so as to perform the grinding processing, the operation handle 52 is removed from the drive shaft 51, and furthermore, the lid 57 is removed from the container main body 54.

Then, the one opening portion of the container main body 54 is exposed, and thus coffee beans 53 which are the material to be ground are put into the exposed opening portion of the container main body 54.

The coffee beans 53 which are put therein reach the position of the mortar body 10 of the present invention, and enter the gap 46 between the inner mortar portion 20 and the outer mortar portion 30 shown in Fig. 2 and the like.

Thereafter, the lid 57 is attached again to the one opening portion of the container main body 54, then the rectangular shaft portion 63 attached to the one end of the drive shaft 51 is inserted through the rectangular shaft hole 64 of the operation handle 52 and thus the operation handle 52 is connected to the drive shaft 51.

Then, a person who performs the grinding processing holds the container main body 54 with one hand, holds the grip 62 of the operation handle 52 with the other hand and rotates the operation handle 52.

Consequently, the coffee beans 53 are ground with the feed blades 21 which are formed on the surface of the second cross-sectional circular part 26 of the inner mortar portion 20 and the third convex portions 43 which are formed in the inner surface of the outer mortar portion 30.

The ground coffee beans are more finely ground with the first convex portions 23 which are formed in the surface of the first cross-sectional circular part 25 of the inner mortar portion 20 and the second convex portions 32 which are formed in the inner surface of the outer mortar portion 30.

Consequently, coffee powder 53A is discharged from the mortar body 10 of the present invention to fall freely and is stored in the powder receiver 58 of the coffee mill 50 of the present invention.

Here, the coffee beans are an example of the material to be ground, and the mortar body and the mill device of the present invention can also grind spices such as pepper, Japanese pepper and sesame and tea leaves.

Then, the mortar body of the present invention and a conventional mortar body were individually used so as to grind coffee beans, and a discharged amount for each of the particle diameter groups of the obtained coffee powder, a grinding torque and the total discharged amount of coffee powder were measured.

Here, as shown in Fig. 3, in the mortar body 10 of the present invention which was used, the second exit concave portions 38 of the outer mortar portion 30 were smaller in area than the second entrance concave portions 33, the second entrance concave portions 33 adjacent to each other were different from each other in area, the second entrance convex portions 34 adjacent to each other were different from each other in convex portion angle, the second exit concave portions 38 adjacent to each other were substantially equal in area to each other and the second exit convex portions 39 adjacent to each other were substantially equal in convex portion angle to each other.

On the other hand, although the conventional mortar body was the same as the mortar body 10 of the present invention in the configuration of the mortar body formed with the inner mortar portion and the outer mortar portion and in the positions in which the concave and convex portions were formed, the entrance concave portions and the exit concave portions of the outer mortar portion were substantially equal in area to each other, the entrance concave portions adjacent to each other were substantially equal in area to each other, the entrance convex portions adjacent to each other were substantially equal in convex portion angle to each other, the exit concave portions adjacent to each other were substantially equal in area to each other and the exit convex portions adjacent to each other were substantially equal in convex portion angle to each other.

The coffee mills which included the mortar bodies as described above were used so as to perform the following grinding test.

Specifically, the inner mortar portion was rotated 100 revolutions at a rotation rate of 60 revolutions per minute so as to grind the coffee beans. Then, the maximum grinding torque in 10 revolutions of the inner mortar portion was measured, and the average value of ten maximum grinding torques obtained by rotating the inner mortar portion 100 revolutions was calculated.

The particle diameter distribution of the discharged coffee powder was measured with a shaking sieve, and the amount of coffee powder for each of the particle diameter groups was measured.

The grinding test was performed by moving the inner mortar portion in the same direction as a direction in which the drive shaft of the coffee mill was extended and setting, to three levels, the distance between the first concave portions and the first convex portions of the inner mortar portion and the second concave portions and the second convex portions of the outer mortar portion.

Specifically, the three levels were a level (F) at which the distance was almost zero, a level (M) at which the distance was 0.7 mm and a level (C) at which the distance was 0.8 mm.

The results are shown in table 1.

**[Table 1]**

| | Distan ce | A Particle Diameter Group Discharg ed Amount (g) | B Particle Diameter Group Discharg ed Amount (g) | C Particle Diameter Group Discharg ed Amount (g) | Grindi ng Torque (Kg·cm ) | Total Disch arged Amou nt (g) |
|---|---|---|---|---|---|---|
| Example 1 | F | None | 2.3 | 11.2 | 13 | 14 |
| Comparat ive Example 1 | | None | 1.8 | 9.5 | 12 | 11 |
| Example 2 | M | 0.1 | 13.1 | 6.2 | 11 | 19 |
| Comparat ive Example 2 | | 0.1 | 8.9 | 5.9 | 11 | 15 |
| Example 3 | C | 0.5 | 14.1 | 4.7 | 10 | 20 |
| Comparat ive Example 3 | | 0.6 | 13 | 4.9 | 11 | 18 |

In table 1, the "A Particle Diameter Group" means the group of the coffee powder whose particle diameter was equal to or greater than 1.7 mm, the "B Particle Diameter Group" means the group of the coffee powder whose particle diameter was equal to or greater than 0.5 mm and less than 1.7 mm and the "C Particle Diameter Group" means the group of the coffee powder whose particle diameter was less than 0.5 mm.

The coffee powder whose particle diameter was equal to or greater than 0.5 mm and less than 1.7 mm is preferable because the coffee powder results in delicious coffee beverages as compared with the coffee powder whose particle diameter was equal to or greater than 1.7 mm and the coffee powder whose particle diameter was less than 0.5 mm.

As can be seen from table 1, the coffee mill including the mortar body 10 of the present invention can discharge a larger amount of coffee powder whose particle diameter falls within a preferable range than the coffee mill including the conventional mortar body, and can realize stable particle sizes.

As described above, the mortar body of the present invention includes the outer mortar portion, that is, a second mortar portion in which in a plane that is extended in the direction substantially orthogonal to the direction in which the drive shaft is inserted, the second exit concave portions adjacent to each other, that is, the one end portions of the second concave portions are substantially equal in area to each other, with the result that it is possible to discharge the powder with uniform sizes.

The mortar body of the present invention includes the second mortar portion in which the one end portions of the second concave portions in a plane that is extended in the direction substantially orthogonal to the direction in which the drive shaft is inserted are smaller in area than the second entrance concave portions, that is, the other end portions on the side opposite to the one end portions of the second concave portions in the direction in which the second concave portions are extended in a plane that is extended in the direction substantially orthogonal to the direction in which the drive shaft is inserted. Hence, as compared with a configuration in which the one end portions and the other end portions are substantially equal in area to each other, it is easy to introduce the material to be ground into the second concave portions, grinding in regions other than the second concave and convex regions for uniformizing the sizes of the powder is reduced and thus it is possible to reduce unnecessary grinding.

Hence, the mortar body of the present invention can produce a large amount of powder having a predetermined particle diameter so as to realize stable particle sizes.

Since the mill device of the present invention includes the mortar body of the present invention, it is possible to produce a large amount of powder having a predetermined particle diameter so as to realize stable particle sizes.

### DESCRIPTION OF REFERENCE NUMERALS

- 10: mortar body
- 20: inner mortar portion
- 21: feed blade
- 22: first concave portion
- 23: first convex portion
- 24: drive shaft insertion hole
- 24A: locking concave portion
- 25: first cross-sectional circular part
- 26: second cross-sectional circular part
- 27: central axis
- 30: outer mortar portion
- 30A: inner mortar portion arrangement space
- 30B: outer surface
- 31: second concave portion
- 32: second convex portion
- 33: second entrance concave portion
- 33A: second entrance large concave portion
- 33B: second entrance medium concave portion
- 33C: second entrance small concave portion
- 34: second entrance convex portion
- 34A: second entrance small convex portion
- 34B: second entrance medium convex portion
- 34C: second entrance large convex portion
- 35A: entrance small convex portion angle line
- 35B: entrance medium convex portion angle line
- 35C: entrance large convex portion angle line
- 36: inner surface corresponding curve
- 37A: entrance small convex portion corresponding tangent
- 37B: entrance medium convex portion corresponding tangent
- 37C: entrance large convex portion corresponding tangent
- 38: second exit concave portion
- 39: second exit convex portion
- 40: exit convex portion angle line
- 41: exit convex portion corresponding tangent
- 42: third concave portion
- 43: third convex portion
- 44: projection portion
- 45: cutout
- 46: gap
- 50: coffee mill
- 51: drive shaft
- 52: operation handle
- 53: coffee beans
- 53A: coffee powder
- 54: container main body
- 54A: inner wall
- 55: adjustment nut
- 55A: screw hole
- 56: rotation preventing member
- 56A: shaft portion
- 56B: shaft hole
- 56C: flange portion
- 57: lid
- 58: powder receiver
- 59: bearing
- 59A: shaft support portion
- 59B: fixed portion
- 60: first washer
- 61: second washer
- 62: grip
- 63: rectangular shaft portion
- 64: rectangular shaft hole
- 65: biasing spring
- 66: flange portion
- 67: rotation suppressing member
- 68: drop suppressing member

## Claims

1. A mortar body comprising:
a first mortar portion through which a drive shaft can be inserted, which can be rotated about a direction in which the drive shaft is inserted and in which a plurality of first concave portions and a plurality of first convex portions are formed in a surface; and
a second mortar portion in which
a space where the first mortar portion can be arranged is formed,
in an inner surface that makes contact with the space and that is extended in the same direction as a direction of the rotation of the first mortar portion, a plurality of second concave portions and a plurality of second convex portions are formed,
the second concave portions and the second convex portions are extended from an edge portion of the inner surface in a direction intersecting the same direction as the direction of the rotation of the first mortar portion,
one end portions of the second concave portions located in the edge portion in a plane that is extended in a direction substantially orthogonal to the direction in which the drive shaft is inserted are smaller in area than other end portions on a side opposite to the one end portions of the second concave portions in the direction in which the second concave portions are extended in a plane that is extended in the direction substantially orthogonal to the direction in which the drive shaft is inserted and
the one end portions of the second concave portions adjacent to each other are substantially equal in area to each other in a plane that is extended in the direction substantially orthogonal to the direction in which the drive shaft is inserted.

2. The mortar body according to claim 1,
wherein the other end portions of the second concave portions adjacent to each other are different from each other in area in a plane that is extended in the direction substantially orthogonal to the direction in which the drive shaft is inserted.

3. The mortar body according to claim 2,
wherein a convex portion angle is an angle of a plane connecting a bottom portion of the second concave portion and a vertex portion of one of the second convex portions adjacent to the second concave portion with respect to the inner surface of the second mortar portion,
the second convex portions adjacent to each other in the one end portion of the second concave portion are substantially equal in the convex portion angle to each other,
the second convex portions adjacent to each other in the other end portion of the second concave portion are different from each other in the convex portion angle and
the convex portion angle of the second concave portion in which the area of the other end portion is the largest is the smallest.

4. The mortar body according to claim 1,
wherein in the inner surface of the second mortar portion, a plurality of third convex portions are formed, and the third convex portions communicate with the second convex portions,
in connection points of the second convex portions and the third convex portions, projection portions which are projected are provided and
a cross-sectional shape of the second mortar portion in a direction substantially orthogonal to the same direction as the direction of the rotation of the first mortar portion is an approximate shape of a letter V with the projection portion serving as a vertex portion.

5. The mortar body according to claim 4,
wherein a shape of the first mortar portion is a substantially truncated cone shape, and the first mortar portion includes: a first cross-sectional circular part of which a cross-sectional shape in the direction substantially orthogonal to the direction in which the drive shaft is inserted is substantially circular; and a second cross-sectional circular part of which a cross-sectional shape in the direction substantially orthogonal to the direction in which the drive shaft is inserted is substantially circular and which has a radius smaller than a radius of the first cross-sectional circular part,
the second convex portions and the second concave portions of the second mortar portion face the first cross-sectional circular part of the first mortar portion,
the third convex portions and the third concave portions of the second mortar portion face the second cross-sectional circular part of the first mortar portion and
a distance between the second convex portions and the second concave portions of the second mortar portion and the first cross-sectional circular part of the first mortar portion is shorter than a distance between the third convex portions and the third concave portions of the second mortar portion and the second cross-sectional circular part of the first mortar portion.

6. A mill device comprising:
a first mortar portion through which a drive shaft can be inserted, which can be rotated about a direction in which the drive shaft is inserted and in which a plurality of first concave portions and a plurality of first convex portions are formed in a surface;
a second mortar portion in which
a space where the first mortar portion can be arranged is formed,
in an inner surface that makes contact with the space and that is extended in the same direction as a direction of the rotation of the first mortar portion, a plurality of second concave portions and a plurality of second convex portions are formed,
the second concave portions and the second convex portions are extended from an edge portion of the inner surface in a direction intersecting the same direction as the direction of the rotation of the first mortar portion,
one end portions of the second concave portions located in the edge portion in a plane that is extended in a direction substantially orthogonal to the direction in which the drive shaft is inserted are smaller in area than other end portions on a side opposite to the one end portions of the second concave portions in the direction in which the second concave portions are extended in a plane that is extended in the direction substantially orthogonal to the direction in which the drive shaft is inserted and
the one end portions of the second concave portions adjacent to each other are substantially equal in area to each other in a plane that is extended in the direction substantially orthogonal to the direction in which the drive shaft is inserted; and
the drive shaft which is extended in one direction, which can be inserted through the first mortar portion so as to be attached to the first mortar portion and which can be rotated about the direction in which the drive shaft is extended.
